# EUROPEAN PATENT APPLICATION

(11) **EP 2 568 420 A2**
(43) Date of publication of application: **13.03.2013**
(21) Application number: 12183398.2
(22) Date of filing: 06.09.2012
(51) Int. Cl.: G06N 5/04, G06N 5/02

(54) **An expert system for making automated decisions in the control of an automated process based on distributed activity data**

(30) Priority: 06.09.2011 US 201113225915
(71) Applicant: eToro Group Ltd, Road Town, Tortola (VG)
(72) Inventor: Assia, Johnathan, Savion (IL)
(74) Representative: Ahmad, Sheikh Shakeel

(57) **Abstract**

An expert system for making automated decisions in control of an automated process based on distributed activity data is described. The expert system comprises: an automated decision execution module adapted to execute decisions relating to executable tasks; a user-account knowledge database adapted to contain data associated with first and second user activity accounts including an activity history which includes decisions made by the user, the data associated with said first user activity account including at least one automatic decision making rule; and an automatic electronic decision generator functionally associated with said automated decision execution module and adapted to automatically generate a first user decision for said first user activity account based on said at least one automatic decision-making rule; wherein, said at least one automatic decision making rule includes a condition dependent on an associated activity recorded in said second user activity account; and wherein said first and second user activity accounts are associated with different users of the system.

## Description

### FIELD OF THE INVENTION

The present invention generally relates to the field of expert systems and automated decisions which are generated by the expert system and executed in the control of an automated process. More specifically, though not exclusively, the present invention relates to methods, systems, platforms and associated software applications for facilitating such automated decisions where the decisions are based on distributed activity data, namely activity of other entities also operating within the same logical environment.

### BACKGROUND

Automation of complex process management is a constant challenge in technology. The problem with such management is that computer technology operates best when within a deterministic domain, namely for a given set of conditions a predetermined response is required. However, for complex process management, for example fault detection in a machine (such as an automobile) where transient faults may occur or in the operation of a complex process such as such as vehicle logistics or vehicle route guidance, where real-time variables may alter otherwise given outcomes, the operation is within a non-deterministic domain in which pre-determined approaches to control often fail.

Expert systems have been known for many years which emulate the decision making process of a human expert. Such systems operate far bettering the non-deterministic domain as they have the ability to use a heuristic approach, namely to use more experienced-based techniques to make decisions. Expert systems basically comprise a knowledge base which stores the data from which decisions are to be made and an inference engine which makes the decisions based on rules, which may also be stored in the knowledge base. Traditionally, the inference engine is tied to its knowledge base and operates only on the information provided to it from the knowledge store. Such expert systems have been limited in their successes to the skills of the programmers which set them up and determine their rules, and to the collection of data the quality of that data which has been provided in the knowledge store.

It is desired to provide an improved expert system which addresses at least some of the above described problems and which can control complex systems and processes in an improved manner to that currently possible.

### SUMMARY OF THE INVENTION

The present inventors have appreciated that some of the limitations with the traditional approaches to using expert systems have been associated with the reliance upon a dedicated knowledge base to drive the expert system. With the recent expanded growth in published information available via the Internet and with the appreciation that at least some of this information contains valuable insights or some other understanding or knowledge regarding the complex system which is being controlled, a new type of knowledge base with a distributed source of information can be used to provide a far better set of information on which the inference engine can make its decisions. In one respect, this expanded scope of information can include empirical evidence published by a wide variety of sources. This type of information can be termed 'socially published information'. This information may include the actual experience of carrying out the complex process as performed by other humans. For example, there may be a body of knowledge on best practice for fault diagnosis of a machine under specific conditions, which could be used to override a single predetermined piece of knowledge or rule to that effect.

Accordingly, the present invention provides rules and strategies that enable decisions to be made to indicate what actions need to be carried out in the control an automated process based on the activities or behavior patterns of other human controllers of such processes ("master decision makers") of a predefined control community. The embodiments of the present invention can also determine when it is best NOT to execute particular decisions based on the activities of another decision maker. This approach is based on the assumption while many members of an experienced control community can provide great assistance in making such decisions it is always wise to algorithmically check the "master decision maker's" decisions and to check the implications of that decision before executing the decision in the implementation of a control strategy.

The algorithms provided by the embodiments of the present invention, grant superiority by mathematically determining whether the "master decision maker's" decisions are prudent, and the algorithms additionally utilize data-mining to detect trends in the wider control community which may have been overlooked by the "master decision maker".

Throughout this description the term "Linked Activity Accounts" may be used to represent an either implicit or explicit interaction involving a relation in which the activities of one of the activity accounts may be influenced at some times and possibly under some constraints by the activities of another account or accounts.

Similarly, Linked-Account Activity Systems ("LAAS") denote mechanisms that implement a control mechanism. Namely, these mechanisms enable the expert system of the present invention to have some of the control activities automatically determined, or influenced in some pre-defined way by the activities of other members (one or more, of a fixed or dynamic identity) of the control community.

### THE SYSTEM OF THE INVENTION (Overview)

According to one aspect of the present invention there is provided an expert system for making automated decisions in control of an automated process based on distributed activity data, the expert system comprising: an automated decision execution module adapted to execute decisions relating to executable tasks; a user-account knowledge database adapted to contain data associated with first and second user activity accounts including an activity history which includes decisions made by the user, the data associated with said first user activity account including at least one automatic decision making rule; and an automatic electronic decision generator functionally associated with said automated decision execution module and adapted to automatically generate a first user decision for said first user activity account based on said at least one automatic decision-making rule; wherein said at least one automatic decision making rule includes a condition dependent on an associated activity recorded in said second user activity account; and wherein said first and second user activity accounts are associated with different users of the system.

Other aspects of the present invention are set forth in the accompanying claims.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
- **Figure 1:**: is a functional block diagram showing an overview of the functional relationships between components of an exemplary expert system, in accordance with an embodiment of the present invention.
- **Figure 2:**: is a block diagram showing components of an exemplary expert system incorporating reference account linkage of another embodiment of the present invention and in particular showing details of a user activity account database;
- **Figure 3:**: is a block diagram showing details of a calculating unit of Figure 1 in greater detail as used in another embodiment of the present invention;
- **Figure 4:**: is a functional block diagram showing an overview of the functional relationships between components of an exemplary Linked Account Trading System, in accordance with an embodiment of the present invention.
- **Figure 5A:**: is an exemplary visual representation of the Automated Trade Rule (A-Trading rule): *"Automatically buy gold when 20 different traders are buying gold",* in accordance with the embodiment shown in Figure 4;
- **Figure 5B:**: is an exemplary visual representation of the Automated Trade Rule: *"Automatically buy Oil when 2 specific pre-defined traders are buying Oif' ,* in accordance with the embodiment shown in Figure 4; and
- **Figure 5C:**: is an exemplary visual representation of another Automated Trade Rule, in accordance with the embodiment shown in Figure 4.
- **Figure 6:**: is a visual depiction of the higher monthly Return on Investment (ROI) achieved using the embodiment of Figure 4, as compared to trading performed in other manners.
- **Figure 7:**: is a functional block diagram of an exemplary trade execution system with Reference Account Linkage, in accordance with the embodiment of Figure 4.
- **Figure 8:**: is a functional block diagram of an exemplary A-Trading Rule Updater, in accordance with the embodiment of Figure 4.

### DETAILED DESCRIPTION

The following description is presented to enable any person skilled in the art to make and use the invention, and is provided in the context of particular applications of the invention and their requirements. Various modifications to the disclosed embodiments will be readily apparent to those skilled in the art and the general principles defined herein may be applied to other embodiments and applications without departing from the scope of the present invention. Thus, the present invention is not intended to be limited to the embodiments shown, but is to be accorded the widest scope consistent with the principles and features disclosed herein. Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, magnetic and/or optic, quantities within the computing system's registers and/or memories into other data similarly represented as physical quantities within the computing system's memories, registers or other such information storage, transmission or display devices.

The present embodiments apply to the automated control of various complex processes. For example, the present embodiments may be applied to the field of fault diagnosis of complex machinery. Also the present embodiments can be applied to complex process management such as in the field of logistics, where available resources and options available for implementing a logistics strategy are constantly changing. Also the present embodiments can be applied to dynamic route planning where changes in environment in real time (traffic, accidents, time of day, etc.) can have a drastic effect on the successful control of a route selection process. The present embodiments can also be applied to non-real time situations such as the diagnosis of medical treatments to be selected for the treatment of a patient where non-deterministic outcomes are regularly encountered and content selection for best describing an image where the process requires semantic machine operation for example. None of the above represent a simple task and the present embodiments provide an expert system which enables better results in the decision making process and thereby better automated control (without the need for human input) of these complex processes.

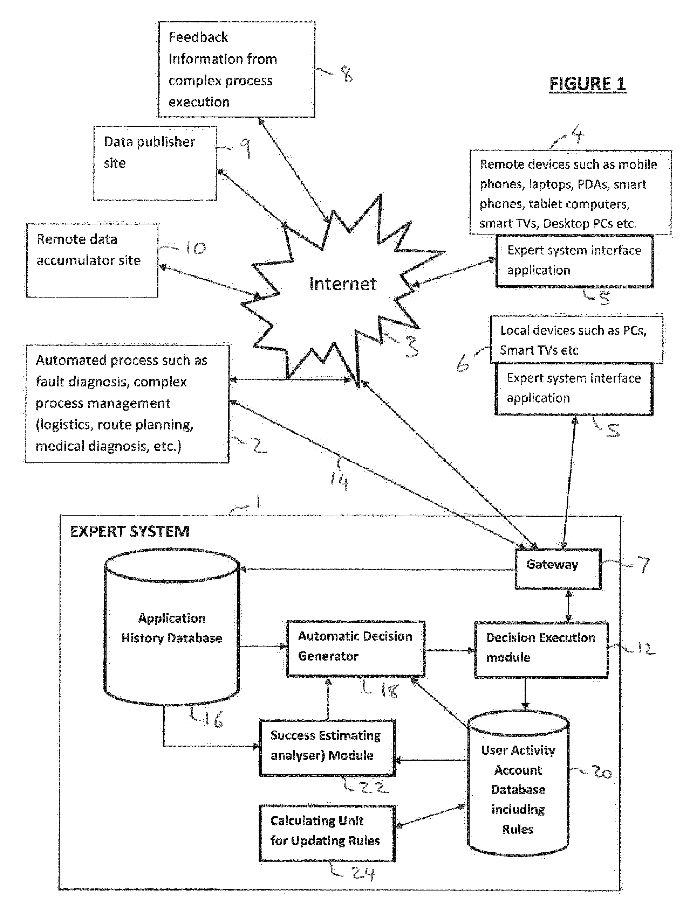

The present embodiments as described in Figures 1 to 3 disclose a system and software application that uses "socially published information" provided at one or more websites, and utilizes data-mining to rank sources of information and identify "master-decision makers". The software allows other users to then link their accounts to such master decision makers, so that future control decisions of the expert system will within limits follow those made by the master decision maker, normally in a fully automatic manner but also possibly in a semi-automatic manner.

The software includes novel automated decision making rules (ADM Rules) that check each decision made by a master-decision maker in control of a complex process and determines as a result of the rule whether it is better to follow the actions of the master decision maker or not. Additional ADM rules may dictate performing specific decisions that were overlooked by the master-decision maker. These suggested decisions are based on algorithmic detection of interaction trends in the control of the complex process which have led to better control of the process, using data mining of "socially published information" provided at one or more of the social websites 8, 9, 10 mentioned above.

Such ADM rules have not been utilized in past with expert systems, and achieve better results for even an experienced user, who may now have the benefit of automatic statistical analysis of potential decisions and on automatic detection of real-time changes to the environment in which the complex process is operating. Regarding Figure 1, there is provided a schematic representation of an expert system 1 embodying the present invention. The expert system 1 operates on a complex process 2 which is shown to be accessed via the internet 3. However it is to be appreciated that the complex process 2 can also be directly be accessed by the expert system if it is being run locally to the expert system 1. Human interaction with the expert system 1 can be made from remote devices 4 such as mobile phones, laptops, PDAs, smart phones, tablet computers, smart TVs, Desktop TVs etc, via an expert system interface 5 and the internet 3. Alternatively or in addition interaction can be made from local devices 6 such as PCs, Smart TVs, smart appliances etc, via an expert system interface 5 directly with a gateway of the expert system 1.

Various sources of socially published information are shown in Figure 1. These include feedback websites 8, Data publisher sites 9 and remote data accumulator sites 10. The feedback websites 8 store feedback from complex process execution and make that content available for the expert system 1 via the internet 3. Similarly the data publisher websites 9 publish information regarding user interaction with the automated process 2 and makes this available to the expert system 1. The remote data accumulator site 10 acts as a web crawler to gather up data from the relevant data publishing sites and store this for access by the expert system via the internet 3.

The expert system comprises a decision execution module 12 which is coupled to the gateway 7 and this module 12 acts to control the complex process 2 (in this embodiment) via the Internet 3. However as is shown in Figure 1 via Arrow 14, this control can also be via a direct communications link. An application history database 16 is also provided for storing a complete history of all interactions with and control of the complex process 2 and also to store the socially published information gathered from the remote publication sites 8,9,10 via the gateway 7. The expert system also comprises an automatic decision generator 18 which acts as an inference engine of the expert system 1 and a user activity account database 20 which includes rules and acts as a knowledge base of the expert system 1.

The expert system 1 further comprises a success establishing module 22 which can apply automatic statistical analysis to historical data stored in the user activity database 20 or in the application history database 16 for example the obtained socially published information. The success establishing module helps the automatic decision generator to make a reasoned decision which takes into account not only the rules and data coming from the knowledge base but also distributed information gathered from outside the expert system regarding the complex process. The expert system 1 also comprises a calculating unit 24 for updating rules stored in the activity database 20.

In use the process to be automatically controlled is determined by user interaction via a remote device 4 or a local device 6. Once selected and possibly set up, the control of the complex process 2 is triggered. Data is constantly read from external socially published information sites 8, 9, 10, and stored in the application history database 16 for use by the automatic decision generator 18. This information together with the history of previous control of the complex process is made available to the automatic decision generator 18. The automatic decision generator also reads information from the user activity account database 20 including the rules stored there as well as receiving statistical analysis information from the success estimating module 22. All of this received information is used to make decisions which are then passed onto the execution module 12. Here decisions are converted into commands which are output to the complex process 2 via the gateway 7.

The activity accounts stored in the activity account database 20 may have one or more ADM Rules associated with it, which each define actions which can be taken if a pre-defined set of circumstances occur. For example, in a route calculation process, if the current average traffic speed in a given area is less than say 10 miles per hour, then avoid this area in determining route planning. If the number of socially published information instances exceeds 5 and they point to a different outcome than the predetermined outcome stored in the knowledge base, then change the outcome to that of the socially published information instances. Generally, the rules can be based on many different combinations of current (real time) events occurring or history of events which have occurred, parameters relating to the state of the complex process, the availability of resources for the complex process, activity which other controllers have carried out in the control of a comparable or the same complex process under similar conditions, any other operational parameters which can affect the control of the complex process.

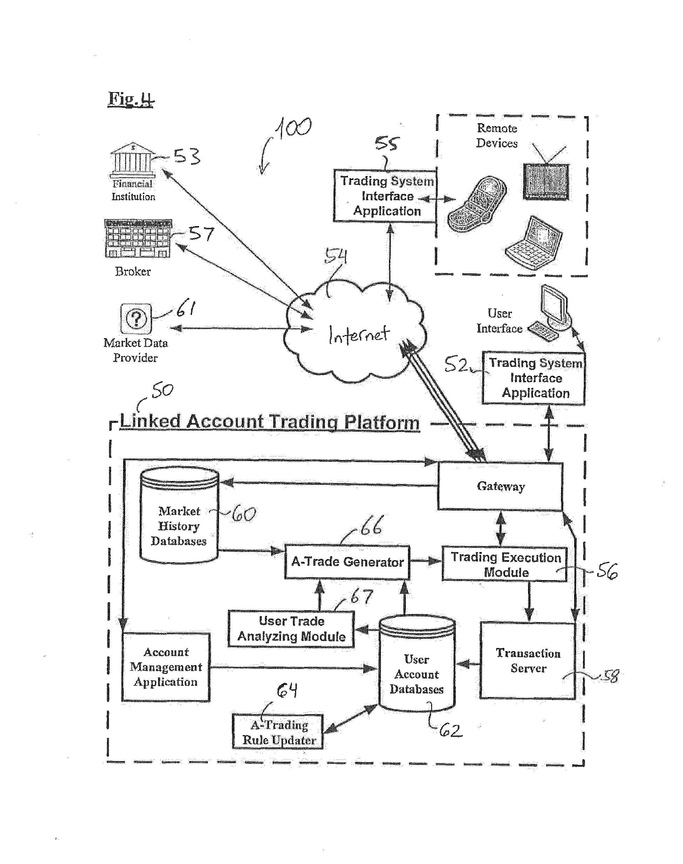

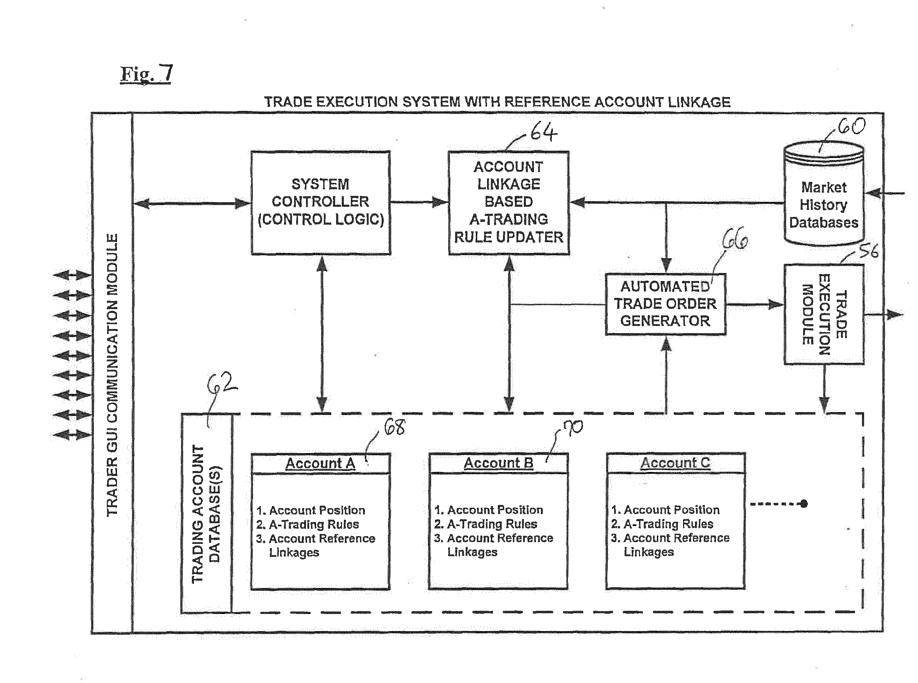

An ADM rule may be associated with a specific activity account of a master decision maker who also has their activity account provided on the expert system. This rule may be associated with one or more of the activity accounts of such an expert decision maker. For example an ADM rule may specify that if the activity account of the master decision maker indicates a positive control to limit the way in which a particular parameter is used, then the rule may be to follow that limitation but with slightly relaxed parameters, say 120% of the stipulated parameters for that action. Many different options have been described in a different context in following embodiments (Figures 4 -8) which can in their generic form be used with the present embodiment.

Referring now to Fig, 2, a functional block diagram is illustrated, of the exemplary expert system 1 of Figure 1 with Reference Account Linkage, in accordance with another embodiment of the present invention. Here the expert system is the same as that described previously with respect to Figure 1 save for the details described below. The expert system 1 includes an Automated Decision Generator 18, adapted to generate decisions for a given activity account based on one or more ADM rules associated with the given activity account. The Automated Decision Generator 18 may monitor the application history databases 16 and the user activity account database 20 to identify the occurrence of any set of circumstances defined within one or more ADM rules associated with one or more activity accounts and generate the associated decisions upon the identification of the pre-defined circumstances. A system logic controller 26 is provided to ensure logical operations are carried out correctly. Within the user activity account database 20 a set of records 28 are provided for each user activity account. These include an activity history 30, rules for decisions 32 (the main rules upon which the automatic decision generator 18 operates), rules for updating 34 (the rules which determine how the rules for decisions can be altered) and account reference linkages 36 (which create connections to other master decision-making accounts. It is to be appreciated that the activity history is made up of records which represent the current activity of the expert system as recorded over time. The provision of several activity accounts provides the ability of the expert system to control different types of processes for different users. Each activity account records the activity for its particular decision making and control task and this is built up over time into the activity history of the user activity account.

Use of the account reference linkages enables an activity account in the knowledge base (the user activity account database 20) to be linked to one or more other user activity accounts in the expert system 1. An activity account linked to another may further comprise specific ADM rules 32 relating to the linked account. For example, activity account A 38 may be linked to activity account B 40, wherein, activity account A comprises an ADM rule: *"if Account B carries out any control of a similar process to that being controlled by Account A, then carry out that same control (decision) for activity account A".* Accordingly, an activity account on the expert system 1 may include Reference Account Linkage Data comprising a listing of activity accounts to which the current activity account is linked ("Reference Accounts") and one or more definitions of the nature of each linkage. It should be understood that, Reference Account Linkage Data may include listings of activity accounts to which the account is linked and listings of activity accounts linked to it.

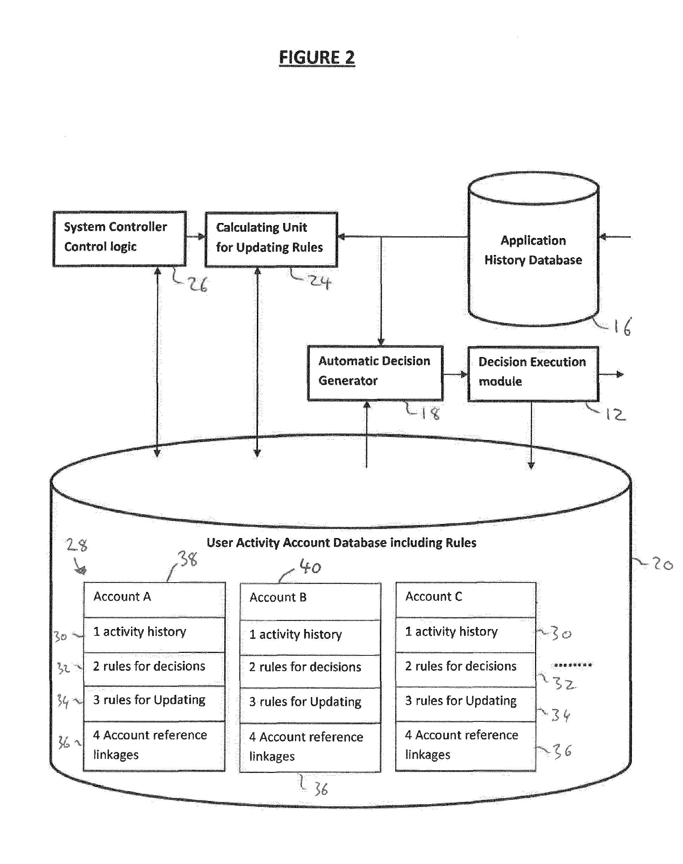

As shown in Figure 2, the shown accounts also comprise ADM rule updating rules 34 associated with the given account, defining formulas for automatically updating ADM rules associated with the given account.

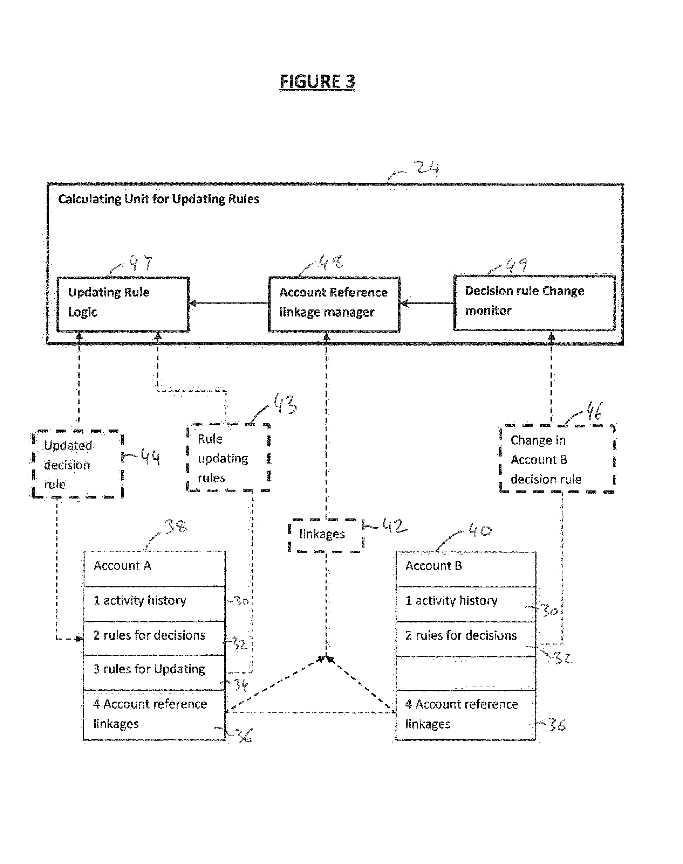

Referring to Fig. 3, a functional block diagram is illustrated, of the exemplary expert system 1 of Figure 1 with a specific ability to update ADM rules in a described way. Here the expert system 1 is the same as that described previously with respect to Figure 1 or 2 save for the details described below. The calculating unit (UPDATER) 24 which is adapted to update the ADM rules 32 associated with a given activity account based on: (1) the given account's defined linkages 42 with one or more reference activity accounts, (2) activity on the reference account, (3) defined activities or events, and/or (4) any other related event.

The Reference Activity Account Linkage Data between a given activity account and a Reference Activity Account may be defined as one or more relationships between activity occurring on the Reference Account and one or more ADM Rules on the given activity account. The rule updating rules 43 determine how ADM rules can be changed. Account linkage parameters may include values or other digital forms of identifiers for: (1) identification of Reference Activity Account(s) to link the given account with; (2) correlating specific activities on the linked reference account with specific ADM Rules on the given activity account; (3) to what extent, and/or how, to change an ADM Rule of the given activity account based on correlated activities on the Reference Account; and (4) any other possibly complex conditions and/or application related (optionally: complex) condition(s) to factor when changing an ADM Rule of the activity account.

Accordingly, the calculating unit 24 acting as a Linked Account Automated Rule Updater (UPDATER) may be adapted to update one or more automatic decision rules 44 (i.e. a first set of ADM Rules) of the given activity account in response to activity within a first Reference Account (Account A 38) to which the given account is linked. The calculating unit 24 may be further adapted to update other automatic rules 46 (i.e. a second set of ADM Rules, which second set may or may not overlap with the first set) of the given activity account in response to activity within a second reference account, Account B 40, to which the given account is linked. Likewise, the calculating unit 24 may be adapted to update ADM rules of each of two or more activity accounts based on activity within one or more reference activity accounts to which each of the two or more activity accounts is linked. The calculating unit 24 is provided with updating rule logic 47, and account reference linkage manager 48 and a decision rule change monitor 49 for performing the above described functions.

According to some embodiments, there may be provided an account management application adapted to interface with a user of the expert system via the System Interface Application, and facilitate user modification of activity account parameters. An Account Management Application may be adapted to allow a user to create, update, modify, cancel or otherwise change any account parameter, including definitions and/or linkage parameters associated with an activity account. Account linkage parameters which may be updated may include: (1) identification or definition of activity account(s) to link with; (2) correlation of specific activities on linked accounts with specific ADM Rules on the activity account; (3) to what extent, and/or how, to change an ADM Rule of the activity account based on correlated activities of a Reference Account; and (4) any other related condition(s) to factor when changing an ADM Rule.

According to some embodiments, there may be provided a system or an environment or a mechanism for representing ADM rules in a variety of ways. Specifically, there may be provided a system or an environment or a mechanism for visually representing ADM Rules using a set of objects and operators that indicate the interactions between them, according to some pre-defined representation language.

According to some embodiments, there may be provided an environment or a mechanism for allowing users of the expert system 1 to view, update, generate, activate, modify or interact in any other way with ADM Rules that are associated with their account.

The following description is directed to a non-limiting set of embodiments of the present invention which are directed to the application of the expert system of the present invention to financial trading. Some of the features described in this context can readily be used in more technical fields as those described above.

Looking at problems which exist specifically in the field of financial trading as a considerable amount of financial trading is now performed via the Internet, it has been suggested to data-mine the trading transactions performed via such websites, in order to detect market trends and to allow a novice trader to follow such trends. Also some websites allow users the ability to mimic automatically the activity of a "master trader" ranked with a high financial success rate. The disadvantage of such automatic copying of a "master trader" lies in human fallacy, namely even the master trader can be prone to error or not notice a market trend or even be ill which would cause problems to his blind followers. The present embodiment overcomes these specific problems by enabling following of master traders only in such cases where their trades are predicted to be successful (profitable). This enables the automated trading to override the "automatic" following of the master-trader and will instruct the novice trader to disregard the master-trader's transaction. Also the present embodiment enables detection of market trends possibly unnoticed by a predefined master trader, and that informs a trader that trades should be performed that the master trader has overlooked.

With the recent increase in electronic markets openness, and the expanded growth in the number of internet based financial services in the last decade, a new kind of algorithmic trading strategies is now enabled - which may be referred to as *"social trading".*

Social Trading - based on the fact that there are nowadays enormous amounts of user generated financial and trading information available online, and the assumption that at least some of this information contains valuable insights or some other understanding or knowledge regarding the markets, a new type of automatic or algorithmic trading mechanism is possible, that would be based on this information. Such a trading method may be called a Social Trading method, as it is based on the information gathered in social environments, in social contexts, or by social interactions (social in this context including the relation between traders whose only commonality is trading in the same environment). This information may include the actual trading activities performed by other traders. A formal way of describing, analyzing and acting upon this information may be provided - which may be denoted as Computational Social Finance, or Computational Social Trading.

Computational Social Science, Finance and Trading - with the spread of pervasive computing systems, an increasing fraction of human interactions nowadays are being digitally captured. These digital breadcrumbs, combined with substantial computational power, create enormous opportunities for ground breaking science. Investigating these newly available pieces of information, seeking internal correlations as well as correlations with global behaviors can lead to an improved understanding of collective human behavior.

The study of the correlation between social interactions and the ability of communities to complete complicated tasks is therefore of extremely high relevance in today's connected world, and of specific applicability for financial trading, due to the enablement of (Computational) Social Trading. To date, there has been no analytical quantitative research of the "efficient" way to manage social based interactions for the purpose of (either self-centric or collaborative) financial trading.

The present embodiment provides novel methods for the representation and execution of automatic trading strategies - social finance based trading.

That is, the present embodiments in the financial domain provide trading rules and strategies that indicate when to trade completely based on the activities or behavior patterns of other members ("master traders") of a predefined trading community. The software of the present embodiments indicates to a user when it is best NOT to trade based on the activities of another trader (based on trading algorithms and strategies). This approach is based on the assumption while many members of a trading community can gain superior revenues from following the activities of other community members rather than self-experimenting with traditional analysis techniques, however, it is always wise to algorithmically check the "master trader's" transactions and to check the market conditions before executing a trade.

The algorithms provided by the present embodiments, grant superiority by mathematically determining whether the "master trader's" transactions are prudent, and the algorithms additionally utilize data-mining to detect market trends overlooked by the "master trader".

Throughout this specific description the term "Linked Accounts" may be used to represent an either implicit or explicit interaction involving a relation in which the trading activities of one of the accounts may be influenced at some times and possibly under some constraints by the trading activities of another account or accounts.

Similarly, Linked-Account Trading Systems ("LATS") denote mechanisms that implement a social trading mechanism. Namely, enable some traders to have some of their trading activities automatically determined, or influenced in some pre-defined way by the trading activities of other members (one or more, of a fixed or dynamic identity) of the trading community.

The present embodiments includes methods, systems, platforms and associated software applications for facilitating automatic or semi-automatic trading of currencies, commodities and financial instruments, using information relating to the trading activities of other traders (optionally in combination with other analysis techniques).

According to some embodiments of the present invention within this financial sphere, there is provided a *Linked-Account Trading System* ("LATS") which may include: (1) a *Linked-Account Trading Platform* (e.g. trading software running on one or more functionally associated servers), and (2) client side *Trading System Interface Applications* (e.g. software application running on a computing platform or within a web-browser of a computing platform) communicatively coupled to the *Linked-Account Trading Platform.*

According to some embodiments, some or all of the trading accounts on the LATS may have one or more Automated Trading Rules or Automated Trading Instructions ("A-Trading" Rules) associated therewith. The LATS may include, or be functionally associated with, an Automated Trade Order Generator adapted to generate trading orders for a given trading account based on one or more automated trading rules associated with the given trading account. According to even further embodiments, the LATS may include an Account Linkage Automatic Trading Rule Updater (UPDATER) which is adapted to update the A-Trading rules associated with a given trading account based on: (1) the given account's defined linkage with one or more reference accounts, (2) activity on the reference account, and/or (3) defined market activities or events.

According to some embodiments, a trading system may include or be functionally associated with a database storing information relating to one or more trading accounts. Information stored for a given account may include: (1) the account's position; (2) one or more A-Trading Rules; and (3) one or more parameters defining the given account's Linkage to other accounts, including one or more Reference Accounts.

Linkage between a given account and a Reference Account may be defined as one or more relationships between trading related activity occurring on the Reference Account and one or more A-Trading Rules on the given account.

Account linkage parameters may include values or other digital forms of identifiers for: (1) identification of Reference Account(s) to link the given account with; (2) correlating specific trading related activities on the linked reference account with specific A-Trading Rules on the given trading account; (3) to what extent, and/or in which way, to change an A-Trading Rule of the given trading account based on correlated trading related activities on the Reference Account; and (4) any other trading related (optionally: complex) conditions and/or market related (optionally: complex) condition(s) to factor when changing an A-Trading Rule of the trading account.

Accordingly, a Linked Account Automated Trading Rule Updater (UPDATER) may be adapted to update one or more automatic trading rules (i.e. a first set of A-Trading Rules) of the given trading account in response to trading related activity within a first Reference Account to which the given account is linked. The UPDATER may be further adapted to update other automatic trading rules (i.e. a second set of A-Trading Rules, which second set may or may not overlap with the first set) of the given trading account in response to trading related activity within a second reference account to which the given account is linked. Likewise, an UPDATER may be adapted to update automatic trading rules of each of two or more trading accounts based on trading related activity within one or more reference accounts to which each of the two or more trading accounts is linked.

The present embodiments allow an UPDATER to periodically define A-trading rules that may optionally be tailored to a specific user or preferred trading style. The A-trading rules define when to automatically trade based on automatic account linkage to one or more detected and ranked master-traders. The A-trading rules will define when to follow other market trends not noted by the master-traders, and when to ignore market fluctuations. Non-limiting examples of A-trading rules are described hereinbelow as well as in the Examples section. According to some embodiments, there may be provided an account management application which allows a user to update account linkage parameters associated with a trading account. Account linkage parameters which may be updated may include: (1) identification of Reference Account(s) to link with; (2) correlate specific trading related activities on the linked account with specific A-Trading Rules on the trading account; (3) to what extent, and/or in which why, to change an A-Trading Rule of the trading account based on correlated trading related activities of the Reference Account; and (4) any other trading related and/or market activity related condition(s) to factor when changing an A-Trading Rule.

According to some embodiments, there may be provided a system or an environment or a mechanism for representing A-Trading rules in a variety of ways. Specifically, there may be provided a system or an environment or a mechanism for visually representing A-Trading Rules using a set of objects and operators that indicate the interactions between them, according to some pre-defined representation language. Accordingly, users of the systems, environments or mechanisms that implement the present embodiments may be provided means to view, update, generate, activate, modify or interact in any other way with A-Trading Rules that are associated with their accounts.

The present non-limiting embodiment includes methods, computer systems, platforms and associated software applications for facilitating automatic or semi-automatic trading of currencies, commodities, securities and financial instruments (hereinafter referred to collectively as: "Financial Assets").

The present embodiment facilitates trading of Financial Assets based on the past or present trading activities of other traders (e.g. "Social Trading", optionally implemented as a "Linked Account Trading System").

In general, the present embodiment discloses a system and software application that follows "social trading" performed at one or more websites, and utilizes data-mining to rank traders and identify "master-traders". The software allows other users to then link their accounts to such master traders, so that future trades will copy those of the master trader's, either in an automatic or semi-automatic manner.

The software includes novel Automated Trading Rules (A-Trading Rules) that check each trade performed by a master-trader and output a decision to a user whether it is suggested to follow the master trader or not. Additional A-trading rules may dictate performing specific trades that were overlooked by the master-trader. These suggested trades are based on algorithmic detection of market trends, using data mining of "social trading" performed at one or more trading websites.

Such A-trading rules have not been utilized in past, and achieve maximum profit for a relatively novice trader, who may now rely on automatic statistical analysis of suggested trades, and on automatic detection of market flux.

Referring to Fig. 4, an overview is shown of the functional relationships existing between components of the system of the present embodiment. The present embodiment provides a *Linked-Account Trading System* ("LATS") 100 which may comprise: (1) a *Linked-Account Trading Platform 50* (e.g. trading software running on one or more functionally associated servers), and (2) one or more client side *Trading System Interface Applications* 52 (e.g. software application running on a computing platform or within a web-browser of a computing platform) communicatively coupled to the *Linked-Account Trading Platform 50,* possibly via a distributed data network, such as the internet 54.

The LATS 100 may further comprise or be functionally associated with a Trade Execution Module 56 adapted to execute trades of Financial Assets on one or more markets and/or exchanges where these are traded. The Trading Module 56 may be adapted to execute trades by: (1) directly executing trades on markets/exchanges 53, possibly via appropriate Application Programming Interfaces 55; (2) ordering desired trades from an exterior trade service provider (Broker) 57; and/or (3) any other Financial Asset trading method known today or to be devised in the future. The LATS 100 may further comprise a Transaction Server 58, which Transaction Server 58 may be adapted to facilitate monetary transactions between a user and the system, i.e. deposit and withdrawal of funds to/from a trading account, and may be further adapted to update account balances and positions, based on the user's activity on the system and results of trades performed by the user on the system.

The LATS 100 may further comprise or be functionally associated with one or more Market History Databases 60 containing data relating to the trade of Financial Assets on one or more markets and/or exchanges where these are traded. The data contained within the Market History Databases may be retrieved and updated from one or more markets/exchanges, directly or via a third party (a "Market Data Provider" 61).

The LATS may further comprise one or more User Account Databases, 62 containing Trading Accounts of users of the LATS. A given Trading Account of a given user of the LATS may include: (1) a current cash/monetary balance available to the given user on the given account; (2) a transaction history for the given account; (3) the given account's open positions (i.e. Financial Assets currently owned and/or owed by the user as a result of trade activity on the given account); (4) a trade history comprising parameters and outcomes of trades previously performed by the given user; (5) Automated Trade Rules ("A-Trade Rules") associated with the given account (further described below); (6) Reference Account Linkage data associated with the given account (further described below); (7) A-Trade Rule Updating Rules in a A-trading rule updater 64, associated with the given account (further described below); and/or (8) any other data relating to a given user trading account.

According to some embodiments, some or all of the trading accounts on the LATS may have one or more Automated Trading Rules or Automated Trading Instructions (A-Trading Rules) associated therewith. A-Trading Rules may comprise definitions of trades to be automatically executed by the LATS when a pre-defined set of conditions are met - a pre-defined set of circumstances occurs, i.e. a pre-defined set of criteria, which when fulfilled, will automatically trigger the execution of pre-defined trades. In other words, A-Trading Rules may comprise one or more algorithms designed to produce parameters of automatic trades to be executed based on a series of variables (the criteria/circumstances). In a simple example, an A-Trade Rule may comprise: *"If the price of oil drops one or more percent over one day more than once within a one week period, sell 50% of oil related financial assets owned."*

According to some embodiments described below, conditions/criteria/circumstances/variables upon the occurrence of which A-Trade Rules may define automatic trades to be executed may include:
a. Market events - i.e. current parameters relating to the trade of one or more financial assets on one or more given markets/exchanges. For example: "If *the price of oil goes below $50";*
b. Market History - i.e. parameters relating to the history of the trade of one or more financial assets on one or more given markets/exchanges. For example: *"If the price of oil goes above its 52 wk average";*
c. Open Positions - i.e. parameters relating to the given user's open positions. For example: *"IfX then sell all oil related open positions";*
d. Account Balance - i.e. the current monetary balance available in the given account. For example: *"If X then purchase oil for 50% of current cash balance";*
e. Other LATS user trades (specific user or users, users that meet a certain criteria, and/or general user trends or actions) - i.e. the trade activity of other users of the system (described in detail below);
f. Any other relevant criteria/circumstance/variable; and/or
g. Any combination thereof.

Accordingly, according to some embodiments described below, a LATS trading account may be associated with A-Trading rules designed to automatically order certain trades of certain financial assets when certain market conditions arise in relation to these financial assets (by containing conditions associated with market events and/or history). An A-Trading rule may further qualify or modify the resulting A-Trade based on the current financial condition of the account (remaining balance, open positions, etc.).

### SOCIAL TRADING

According to further embodiments, an A-Trade rule associated with a user trading account on a LATS may include conditions relating to the trading activity of other users of a LATS. These conditions may be related to one or more specific traders, one or more specific groups of traders and/or the general behavior of traders on the system.

Accordingly, A-Trade rules containing conditions relating to the trading activity of other users of a LATS may include:
a. rules designed to condition trades on the trading activity of certain traders selected by a user. For example, an A-Trade rule may comprise: *"If Trader* X *purchases an oil related financial asset, purchase the same financial asset for 20% of the remaining balance on the account."* Or, *"If 2 of the 3 traders X,Y and Z purchase an oil related financial asset on the same day, purchase the same financial asset for 20% of the remaining balance on the account";*
b. rules designed to condition trades on the trading activity of certain types of traders, or traders meeting certain criteria, which define them as "master traders". For example, an A-Trade rule may comprise: *"If a Trader which averages more than 10% profit per annum on oil related trades purchases an oil related financial asset, purchase the same financial asset for 20% of the remaining balance on the account."* Or, *"If 30% or more of traders which average more than 10% profit per annum on oil related trades, purchase an oil related financial asset, purchase the same financial asset for 20% of the remaining balance on the account."*
c. rules designed to condition trades on the trading activity of the general public of traders on a LATS. For example, an A-Trade rule may comprise: *"If more than 20% of Traders on the system purchase an oil related financial asset, purchase the same financial asset for 20% of the remaining balance on the account."* Or, *"If 30% or more of traders on the system, purchase an oil related financial asset on the same day and no more than 10% of the traders on the system sell the same financial asset on the same day, purchase the same financial asset for 20% of the remaining balance on the account";*
d. rules designed to condition trades based on a criteria relating to the trades themselves, without reference to the traders executing the trade. For example: *"If trading volume of sale of a specific financial asset on the system rises more than 300% within an hour, sell any holdings of the specific financial asset currently within the trading account";*
e. rules designed to allocate a portion of the trader's funds in a way which copies or duplicates the trading activities of another trader, or a group of traders, optionally using a different leverage;
f. rules designed to allocate a portion of the trader's funds in a way which copies or duplicates the trading activities of another trader, or a group of traders, optionally using a different leverage; automatically for a pre-defined period of time, or until being deactivated; and/or
g. any other A-Trade rule including as a condition to its operation a reference to trading activity on a LATS.

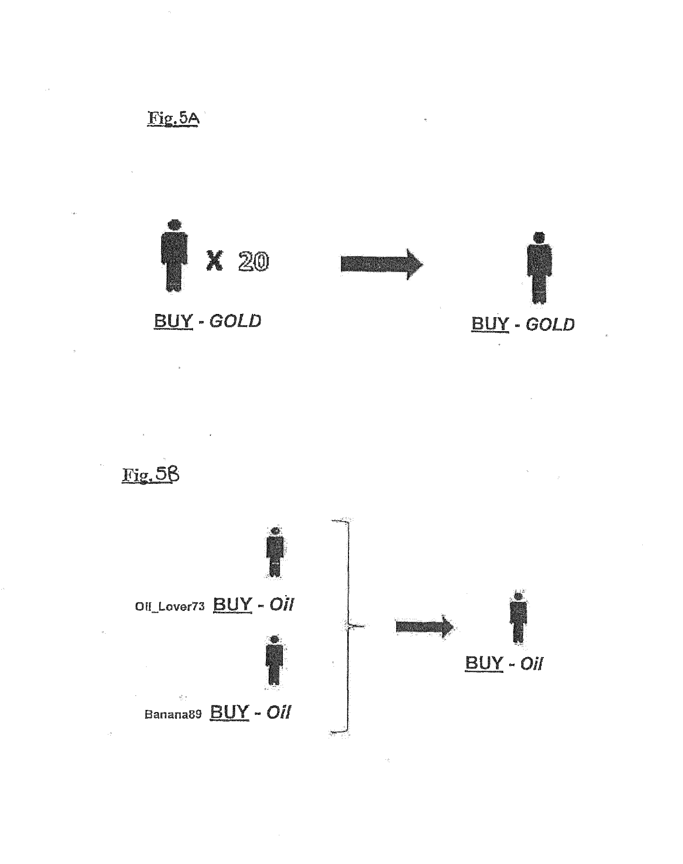

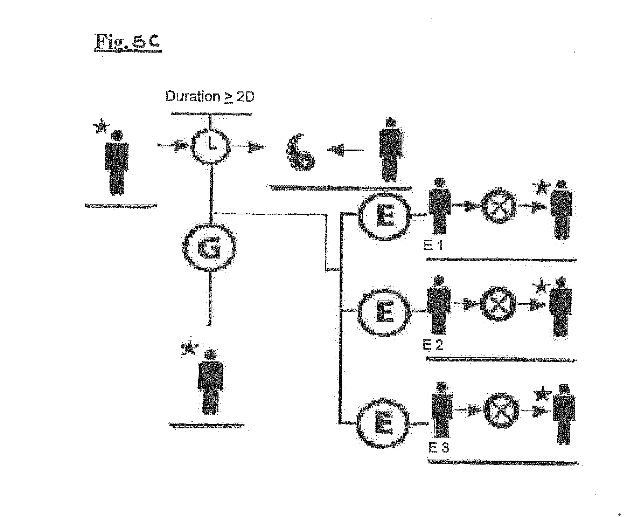

Referring to Fig. 5, examples of simple A-trading rules are shown.

In Fig. 5A, a simplified A-trading rule is depicted, in which, "Automatically buy gold when 20 different traders are buying gold".

Referring to Fig. 5B, two specific traders were identified as "master traders", namely a trader having the username "Oil_Lover73" and another trader having the username "Banana98". The A-trading rule executed is "if both these master traders are purchasing a single commodity then buy this commodity as well". In this instance, both traders have purchased oil, therefore the software of the present embodiment will automatically buy oil for the linked account, at a predefined quantity.

The weight given to any specific master trader's activities may be pre-set by the individual or by the system. Thus, for instance, a linked user's account may have defined A-trading rules, which determine that 20% of trading activities should mimic those of Account A (master trader A), while 80% of activities should mimic those of Account B (master trader B).

Referring to Fig. 5C, a visual representation is shown of the logic used by the software of the present embodiment, to automatically identify Master traders. This logic is included in a module for ranking traders and identifying master traders: "Automatically copy all the activities of a trader that:
has had over some pre-defined number of positive closed positions (P1, P2, P3...) at a given time T;
after at least 20 days from T had closed a profitable position of high leverage that was open against the market trend at the time of opening;
throughout this period the trader has always maintained a positive trading score; and
there exist at least 3 different traders that opened positions that were opposite to the above positions of this trader (P1,P2,P3...), and have closed them with a loss."
Wherein, in the exemplary visual representation presented in figure 5C, "G" denotes the "Globally" temporal logic operator and "E" denotes the "Exists" temporal logic operator.

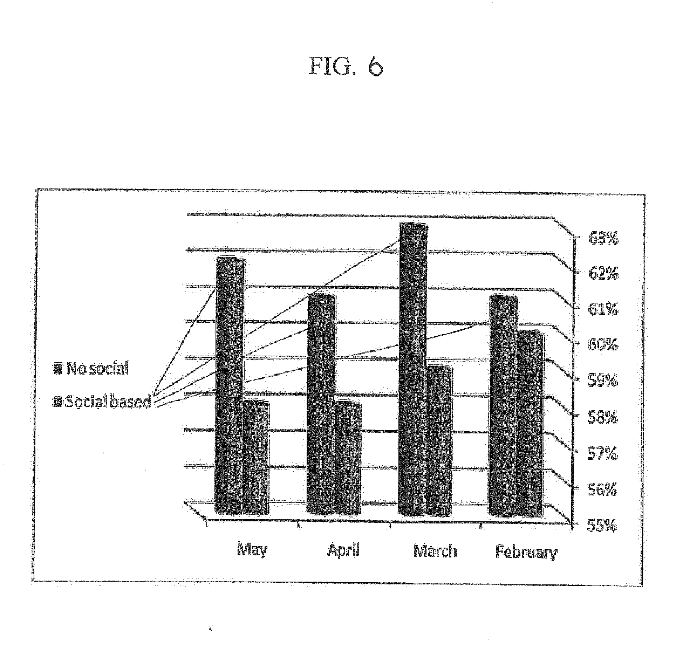

Referring now to Fig. 6, the monthly Return on Investment (ROI) is shown to be higher for traders using the semi-automatic social trading software of the present embodiment, as compared with the ROI for other traders who do not use the present embodiment. In the graph plotted, master traders were identified by the software of the present embodiment, and users were asked whether to link their accounts to those of the identified master traders, thus social trading is termed "semi automatic". Before each trade was performed, users were informed of the intention to mimic the trading actions of the master user, and a mathematical calculation was automatically performed to estimate the prudence of the trade. Such a mathematical calculation is performed by a "profitability estimating module" of the system.

The user received an outputted estimation weighing the chance of success, which he could take into account before instructing the system whether to mimic the master trader's actions.

In all months shown, the ROI of traders who traded using this semi-automatic embodiment, was significantly higher than other traders who traded using other methods.

In fact, during the period of 14/5/2011 - 14/6/2011, this picture has become even clearer :
- 338,383 new positions.
- 10,789 positions were copied (3.19%).
- Win Ratio:
   - Normal : 60.82%
   - Copied : 67.20%
- Average net profit:
   - Normal: -$6.26
   - Copied: $0.23
- Gurus (Master Traders): 95.

This shows that as the trading rules become more effective, they "describe" reality in a better way, immediately translated to higher returns.

### Example 1: A-Trading Rule

Our method is based on calculating the cumulative alpha of each trader, based on which we construct a probabilistic algorithm for deciding which trader(s) to put which portion of our money on. The meta-learning algorithm which we want to apply is able to construct a compound algorithm from a pool of prediction algorithms. The prediction algorithms (corresponding to user decisions) are various types of learning algorithms or classifiers. Though there are many algorithms in the pool, there are sufficient reasons to believe that one or more will perform well.

For simplicity, assume that the setting is of binary decision problems. Namely, at each round one prediction bit is gotten from each user (BUY/SELL), and we need to output a single bit as well, based on the current predictions and past history of the users. To this end we construct the compound algorithm, which gives a positive weight to each of the algorithms in the pool. The compound algorithm then collects weighted predictions from all the algorithms in the pool, and gives the prediction that has a higher vote. If the compound algorithm makes a mistake (a "mistake" is defined as a suboptimal prediction), the algorithms in the pool that contributed to the wrong predicting will be discounted by a certain ratio between 0 and 1.

It can then be shown that the upper bounds on the number of mistakes made in a given sequence of predictions from a pool of algorithms can roughly be bounded by: 0(log(n) + m)

where "n" is the number of users and "m" is the number of mistakes made by the best algorithm in the pool.

There are many variations of the sketched algorithm to handle different (more general) situations, but the core mechanism remains similar, with the final performances of the compound algorithm bounded by a function of the performance of the specialist (best performing algorithm) in the pool. Tailoring the best compound algorithm will constitute the main bulk of the implementation.

The following Examples 2-3 describe well defined complex A-trading rules that are based on social trading information:

### Example 2: A-trading Rule 2

Input - a graph G that represents the "linked" interactions between the various users (each directed edge represents a single connection).
Let "N" be the adjacency matrix that corresponds to the graph G.
Let "A" be the inverse of the largest value of the matrix N.
Let "p_spread" be the probability that if some user purchases a commodity X, its neighbors also purchase this same commodity (calculated from observations carried out on past data).
Let "T" be the expected time from purchase of a commodity until it is sold.
If (T*P_spread > A) then we can predict that a "trend" of purchases is expected. Hence, the software would automatically follow purchasing performed by master users having the top profitability ranking.

### Example 3: A-trading Rule 3

Rank the users according to the number of their followers in the social trading network.
We allocate our investment money automatically pro-rata to the top 10 users ("top" means the users with the most followers).

Clearly, A-Trade rules in accordance with some embodiments may include a combination of one or more conditions relating to other users trading activity and any other type of condition (such as a market history condition). For example, an A-Trade rule may comprise: *"If the price of a specific financial asset drops more than 10% within* a 3 *day period and 20% or more of the traders on a LATS have purchased this specific asset within those* 3 *days, automatically purchase this asset using 20% of the remaining balance in the account."*

Referring now to Fig, 7, a functional block diagram is illustrated, of an exemplary trade execution system with Reference Account Linkage, in accordance with some embodiments the LATS may include, or be functionally associated with, an Automated Trade Order Generator (an "A-Trade Generator") 66, adapted to generate trading orders for a given trading account based on one or more automated trading rules associated with the given trading account. The A-Trade Generator 66 may monitor the Market History Databases 60 and the Accounts Databases 62 to identify the occurrence of any set of circumstances defined within one or more A-Trade Rules associated with one or more user accounts and generate the associated A-Trades upon the identification of the pre-defined circumstances.

According to further embodiments, a LATS 100 may further comprise a User Trade Analyzing Module 67 adapted to monitor, record and analyze trade activity of users of the LATS and extract parameters relating to the trade activity of specific users of the LATS, specific groups of users of the LATS (selected and/or defined by criteria) and/or all the users of the LATS. The User Trade Analyzing Module 67 may display recorded trade activity and the results of its analysis to a user and/or this data, in whole or in part, may serve an A-Trade Generator 66 in its operation (i.e. a User Trade Analyzing Module 67 may assist an A-Trade Generator in monitoring user trading accounts and user trading activity on the system). Examples of analysis a User Trade Analyzing Module 67 may perform upon recorded trade activity of users may include identifying specific users or groups of users whose trading history answers certain criteria (e.g. users with an average return of 20% annum or higher), identifying trends in general user trade (e.g. 30% of traders have sold oil related financial assets today), extracting specific variables relating to LATS user trading (e.g. what percentage of LATS users currently hold oil related financial assets equaling at least 20% of their portfolio) and/or any other analysis of LATS user trading activity.

According to further embodiments, a trading account on a LATS may be linked to one or more other trading accounts on a LATS. A Trading Account linked to another may further comprise specific A-Trading rules relating to the linked account. For example, trading account A 68 may be linked to trading account B 70, wherein, trading account A comprises an A-Trade rule: *"if Trader B orders any trade, order the same trade for trading account A".* Accordingly, a trading account on a LATS may include Reference Account Linkage Data comprising a listing of trading accounts to which the account is linked ("Reference Accounts") and one or more definitions of the nature of each linkage. It should be understood that, Reference Account Linkage Data may include listings of trading accounts to which the account is linked and listings of trading accounts linked to it.

According to yet further embodiments, a given trading account on a LATS may further comprise A-Trade Rule Updating Rules associated with the given account, defining formulas for automatically updating A-Trade rules associated with the given account based on:
a. market history and/or events. For example: *"**If** the price of oil goes below $50 a barrel, enact A-Trade Rule: whenever trader X purchases oil related financial assets, purchase the equivalent amount for the given account.";*
b. trading activity on one or more reference accounts. For example: *"If traderX goes below 20% average return per annum, cancel A-Trade Rule: whenever trader X purchases oil related financial assets, purchase the equivalent amount for the given account.";*
c. A-Trade rule changes on a reference account. For example: *"If trader X changes any of his*/*her A-Trade rules, enact identical changes in A-Trade rules associated with the given account.";*
d. Any other relevant event; and/or
e. Any combination thereof.

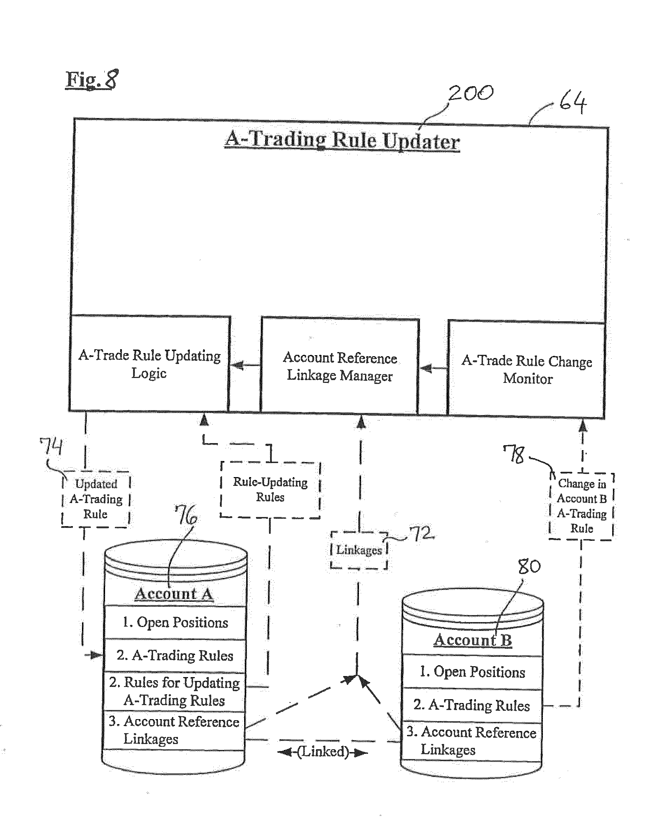

Referring to Fig. 8, according to even further embodiments, the LATS may include an Account Linkage Automatic Trading Rule Updater (UPDATER) 200 which is adapted to update the A-Trading rules associated with a given trading account based on: (1) the given account's defined linkages 72 with one or more reference accounts, (2) activity on the reference account, (3) defined market activities or events, and/or (4) any other related event.

According to some embodiments, Reference Account Linkage Data between a given account and a Reference Account may be defined as one or more relationships between trading related activity occurring on the Reference Account and one or more A-Trading Rules on the given account. Account linkage parameters may include values or other digital forms of identifiers for: (1) identification of Reference Account(s) to link the given account with; (2) correlating specific trading related activities on the linked reference account with specific A-Trading Rules on the given trading account; (3) to what extent, and/or how, to change an A-Trading Rule of the given trading account based on correlated trading related activities on the Reference Account; and (4) any other trading related (optionally: complex) conditions and/or market related (optionally: complex) condition(s) to factor when changing an A-Trading Rule of the trading account.

Accordingly, a Linked Account Automated Trading Rule Updater (UPDATER) 200 may be adapted to update one or more automatic trading rules 74 (i.e. a first set of A-Trading Rules) of the given trading account in response to trading related activity within a first Reference Account, Account A 76, to which the given account is linked. The UPDATER may be further adapted to update other automatic trading rules 78 (i.e. a second set of A-Trading Rules, which second set may or may not overlap with the first set) of the given trading account in response to trading related activity within a second reference account, Account B 80, to which the given account is linked. Likewise, an UPDATER 200 may be adapted to update automatic trading rules of each of two or more trading accounts based on trading related activity within one or more reference accounts to which each of the two or more trading accounts is linked.

According to some embodiments, there may be provided an account management application adapted to interface with a user of the LATS (a trader), possibly via a Trading System Interface Application, and facilitate user modification of trading account parameters. An Account Management Application may be adapted to allow a user to create, update, modify, cancel or otherwise change any account parameter, including A-Trade definitions and/or linkage parameters associated with a trading account. Account linkage parameters which may be updated may include: (1) identification or definition of Trading Account(s) to link with; (2) correlation of specific trading related activities on linked accounts with specific A-Trading Rules on the trading account; (3) to what extent, and/or how, to change an A-Trading Rule of the trading account based on correlated trading related activities of a Reference Account; and (4) any other trading related and/or market activity related condition(s) to factor when changing an A-Trading Rule.

According to some embodiments, there may be provided a system or an environment or a mechanism for representing A-Trading rules in a variety of ways. Specifically, there may be provided a system or an environment or a mechanism for visually representing A-Trading Rules using a set of objects and operators that indicate the interactions between them, according to some pre-defined representation language.

According to some embodiments, there may be provided an open system or an environment or a mechanism for allowing users of the LATS to view, update, generate, activate, modify or interact in any other way with A-Trading Rules that are associated with their account.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the embodiments as described herein.

It should be understood by one of skill in the art that some of the functions described as being performed by a specific component of the system may be performed by a different component, or combination of components, of the system in other embodiments of this invention.

The embodiments of present invention can be practiced by employing conventional tools, methodologies and components. Accordingly, the details of such tools, components and methodologies are not set forth herein in detail. In the previous descriptions, numerous specific details are set forth, in order to provide a thorough understanding of the present invention. However, it should be recognized that the present invention might be practiced without resorting to the details specifically set forth.

In the description and claims of embodiments of the present invention, each of the words, "comprise" "include" and "have", and forms thereof, are not necessarily limited to members in a list with which the words may be associated.

Only exemplary embodiments of the present invention and but a few examples of its versatility are shown and described in the present disclosure. It is to be understood that the present invention is capable of use in various other combinations and environments and is capable of changes or modifications within the scope of the inventive concept as expressed herein.

## Claims

1. An expert system for making automated decisions in control of an automated process based on distributed activity data, the expert system comprising:
an automated decision execution module adapted to execute decisions relating to executable tasks;
a user-account knowledge database adapted to contain data associated with first and second user activity accounts including an activity history which includes decisions made by the user, the data associated with said first user activity account including at least one automatic decision making rule; and
an automatic electronic decision generator functionally associated with said automated decision execution module and adapted to automatically generate a first user decision for said first user activity account based on said at least one automatic decision-making rule;
wherein said at least one automatic decision making rule includes a condition dependent on an associated activity recorded in said second user activity account;
and
wherein said first and second user activity accounts are associated with different users of the system.

2. The system according to Claim 1, wherein said automatic electronic decision generator is arranged to generate a decision in said first user activity account, based on an automated decision making rule selected from one or more of the following group:
i) a rule to copy a decision performed by a preselected second user and recorded in a preselected second user activity account;
ii) a rule that identifies a master decision maker and copies decisions performed by said master decision maker;
iii) a rule that copies a decision when a predetermined number of users also make that decision;
iv) a rule that generates a decision to execute a predetermined action to an entity when a predefined change occurs in relation to that entity;
v) a rule defining the number of tasks to be executed;
vi) a rule defining the length of time to copy decisions performed by said second user and recoded in said activity account; and
vii) a rule that defines the ranking assigned to a plurality of master decision makers.

3. The system according to Claim 1 or 2 , wherein said least one automatic decision-making rule for generating a decision in said first user activity account, is dependent on one or more of the following group: an event within an environment within which the task may take place; a history of events which have occurred within the environment within which the task may take place; an current state of the user to whom the task relates; and the resource available to that user to whom the task relates.

4. The system according to any preceding claim, wherein the system includes a likelihood of success estimating module, for mathematically determining whether a decision performed by a first user and recorded in the first user's activity account is likely to be successful; said likelihood of success estimating module outputting a success estimate for consideration by the automatic electronic decision generator.

5. The system according to any preceding claim, wherein: said user-account database contains data associated with a third user activity account; and wherein said automatic decision-making rule further includes a condition dependent on said history of decision-making activity in said third user activity account.

6. The system according to any preceding claim, wherein said data associated with said first user activity account include a second automatic decision-making rule, which second automatic decision-making rule includes a condition dependent on the decision-making activity of more than 2 other users of the system.

7. The system according to any preceding claim, wherein said at least one automatic decision-making rule further includes a condition dependent on the decision-making history of said second user activity account.

8. The system according to any preceding claim, wherein said at least one decision-making rule further includes a condition dependent on the decision-making activity of all users of the system.

9. The system according to any preceding claim, wherein said automatic electronic decision generator is further adapted to generate, for said at least said first user activity account, decisions identical to every decision executed by the system for said second user activity account.

10. The system according to any preceding claim, further comprising an electronic module for ranking success of users who are also making decisions and for identifying a master decision-maker who has a highest ranking.

11. The system according to claim 1, wherein said automatic electronic decision generator can also be adapted to operate in a semi-automatic mode, wherein a user is queried prior to performance of a decision-making activity.

12. The system according to any preceding claim, further comprising:
a memory for storing an automatic decision-making rule of the first or second user activity account;
a calculating unit responsive to recorded activities within the first reference activity account to which the given user activity account is linked, and
updating said automatic decision-making rule in said memory.

13. The system according to Claim 12, wherein said calculating unit is further adapted to update other automatic decision-making rules of the first or second user activity account in response to recorded activities within a second reference activity account to which the first or second activity account is linked.

14. The system according to Claim 12 or 13, wherein said calculating unit is adapted to update the automatic decision-making rules of each of first and second user activity accounts based on recorded activities within one or more reference accounts to which each of said first and second user activity accounts is linked.
